# EUROPÄISCHE PATENTSCHRIFT

(11) **EP 4 298 475 B1**
(45) Veröffentlichungstag und Bekanntmachung des Hinweises auf die Patenterteilung: **01.07.2026**
(21) Anmeldenummer: 22706730.3
(22) Anmeldetag: 11.02.2022
(51) Int. Cl.: G02B 6/38, H01R 13/62

(54) **PUSH-PULL-STECKVERBINDER MIT VERRIEGELUNG**
PUSH-PULL PLUG WITH LOCK
FICHE DE TYPE POUSSER-TIRER AYANT UN VERROU

(30) Priorität: 23.02.2021 DE 102021104251
(43) Veröffentlichungstag der Anmeldung: 03.01.2024
(73) Patentinhaber: HARTING Electronics GmbH, 32339 Espelkamp (DE)
(72) Erfinder: GENAU, Marc, 32339 Espelkamp (DE); ELLERMANN, Alexander, 32339 Espelkamp (DE)
(86) Internationale Anmeldenummer: PCT/DE2022/100117
(87) Internationale Veröffentlichungsnummer: WO 2022/179661

(56) Entgegenhaltungen:
- WO-A1-2015/063048
- DE-A1- 102008 012 125
- DE-B3- 102019 112 899
- DE-U1- 212013 000 073
- FR-A1- 2 933 243
- US-A- 5 190 466
- US-A1- 2018 252 872

## Beschreibung

Die Erfindung geht aus von einem Steckverbinder nach der Gattung des unabhängigen Anspruchs 1.

Derartige Steckverbinder werden benötigt, um Leitungen reversibel miteinander zu verbinden. Dabei werden Steckverbinder an Enden von Leitungen befestigt und einzelne Leiter in der Leitung mit Kontaktelementen versehen, die im Steckverbinder aufgenommen sind. Die Kontaktelemente können bei der Verbindung des Steckverbinders mit einem weiteren Gegensteckverbinder oder einer Buchse korrespondierende Kontaktelemente im Gegensteckverbinder oder in der Buchse kontaktieren.

Gattungsgemäße Steckverbinder werden auch als Push-Pull-Steckverbinder bezeichnet. Diese Steckverbinder funktionieren nach einem gleichen Grundprinzip. Um eine sichere Verbindung mit einem Gegensteckverbinder zu gewährleisten, verfügen diese Steckverbinder meist über Rastmittel, welche eine Verrastung der Steckverbinder miteinander ermöglichen. Um die Verrastung zu lösen, sind aus dem Stand der Technik diverse Mechanismen bekannt. Eine häufig genutzte Mechanik ist die sogenannte Push-Pull (Drücken-Ziehen) Verriegelung. Hierbei verrastet der Steckverbinder beim Verbinden mit dem Gegensteckverbinder selbsttätig. Durch Drücken (Push) wird verrastet. Gelöst wird die Verriegelung durch Ziehen (Pull) an einem Schiebeelement, welches zumindest teilweise das Gehäuse des Steckverbinders bildet. Beim Verschieben des Schiebeelements entgegen der Steckrichtung wird die Mechanik zur Verrastung des Steckverbinders betätigt und der Steckverbinder vom Gegensteckverbinder gelöst.

### Stand der Technik

Aus dem Stand der Technik sind diverse Push-Pull-Steckverbinder bekannt, welche alle nach einem ähnlichen Prinzip ver- und entrasten. Durch Aufstecken eines Steckverbinders auf einen Gegensteckverbinder werden beide miteinander verrastet. Durch Ziehen an einem Schiebeelement wird die Verrastung gelöst und der Steckverbinder kann abgezogen werden.

Nachteilig wirkt sich bei den bekannten Lösungen aus, dass die Einfachheit der Konstruktion sich ebenso negativ auswirken kann. Durch das bloße Abziehen des Steckverbinders kann diese vom Gegensteckverbinder gelöst und dekontaktiert werden. Je nach Anwendung kann sich dies negativ auswirken und ungewollt sein. So kann zum Beispiel bei einer Vielzahl von angeordneten Push-Pull-Steckverbindern auf sehr engem Raum beim Abziehen eines Steckverbinders ein benachbarter Steckverbinder versehentlich mit gelöst und dekontaktiert werden.

Die WO 2017/084654 A1 zeigt einen Push-Pull-Steckverbinder mit einer Verriegelungsmechanik, die ein versehentliches Abziehen des Steckverbinders und ein damit verbundenes ungewolltes Trennen einer Verbindung verhindert. Eine derartige Mechanik ist jedoch komplex aufgebaut und daher mit höheren Produktionskosten verbunden.

Die DE 10 2019 112 899 B3 zeigt einen Push-Pull-Steckverbinder, dessen Steckverbindung mithilfe eines axial verschiebbaren Sperrelements verriegelbar ist. Dabei blockiert das Sperrelement die verschiebbare Push-Pull-Hülse des Push-Pull-Steckverbinders.

Die DE 10 2008 012 125 A1 zeigt eine Gerätesteckverbindung mit einem Gerätestecker, der in eine Gerätebuchse einsteckbar und darin mithilfe eines komplexen Schließmechanismus sicherbar ist.

Die US 5 190 466 A zeigt einen Gerätesteckverbinder, der im eingesteckten Zustand durch Drehung eines außen zugänglichen Schlüssels, mechanisch in einer Buchse verriegelt werden kann.

Das Deutsche Patent- und Markenamt hat in der Prioritätsanmeldung zu vorliegender Anmeldung den folgenden Stand der Technik recherchiert: US 2017 / 0 170 596 A1 und WO 2015/ 063 048 A1.

### Aufgabenstellung

Der Erfindung liegt daher die Aufgabe zugrunde, einen Push-Pull-Steckverbinder vorzustellen, welcher gegen das versehentliche Entriegeln und Dekontaktieren gesichert werden kann. Der Steckverbinder soll so ausgebildet sein, dass zum Lösen des Steckverbinders zumindest ein weiterer Handgriff getätigt werden muss. Für eine einfache Handhabung soll jedoch weiterhin eine Bedienung mit einer Hand möglich sein. Weiterhin soll der Steckverbinder keine nennenswert höheren Produktionskosten verursachen als ein vergleichbarer Steckverbinder ohne Verriegelungsfunktion.

Die Aufgabe wird durch den Gegenstand der unabhängigen Ansprüche gelöst.

Vorteilhafte Ausgestaltungen der Erfindung sind in den Unteransprüchen und der folgenden Beschreibung angegeben.

Der erfindungsgemäße Steckverbinder weist im Wesentlichen einen Grundkörper und ein Schiebeelement auf. Der Steckverbinder weist eine Steckseite und eine Anschlussseite auf, wobei der Steckverbinder eine Steckachse (A) bildet, welche sich von der Steckseite hin zu der Anschlussseite durch den Steckverbinder erstreckt.

Das Schiebeelement umfasst den Grundkörper und ist auf dem Grundkörper, entlang der Steckachse des Steckverbinders, beweglich angeordnet bzw. gelagert.

Erfindungsgemäß weist der Steckverbinder ein Sperrelement auf, welches zwischen einer offenen Stellung und einer verriegelten Stellung drehbar an dem Schiebelement angeordnet ist.

Vorteilhafterweise ist die Drehachse des Sperrelements senkrecht zur Steckachse des Steckverbinders (1) ausgerichtet. Hierdurch wird der Platzbedarf des Steckverbinders - in Richtung seiner Steckachse - nicht vergrößert.

Vorzugsweise durchdringt das Sperrelement das Schiebelement. Damit ist gemeint, dass das Sperrelement innerhalb einer Öffnung des Schiebelements angeordnet ist und sowohl innen, also zum Grundkörper hin als auch nach außen, also vom Grundkörper weg, aus dem Schiebeelement herausragt. Dadurch kann das Sperrelement platzsparend am Steckverbinder integriert werden.

Vorteilhafterweise weist das Schiebeelement eine innenliegende und parallel zur Steckachse des Steckverbinders verlaufenden Führungsschiene auf. Entlang der Führungsschiene kann das Schiebeelement, wie oben bereits ausführlich beschrieben, zu Verbindungszwecken mit einer Buchse oder einem Gegensteckverbinder entlang der Steckachse hin- und hergeschoben werden.

Vorzugsweise weist das Sperrelement einen zum Grundkörper gerichteten Steg auf. Wenn der Steg senkrecht zur Führungsschiene steht, befindet sich das Sperrelement in der verriegelten Stellung. Wenn der Steg parallel zur Führungsschiene steht, befindet sich das Sperrelement in der offenen Stellung. Eine derartige Mechanik ist sehr einfach zu konstruieren. Die mechanische Funktion des Steges wird weiter unten noch genauer erläutert.

Vorteilhafterweise sind am Grundkörper zwei parallel zueinander angeordnete Laschen angeformt. Diese Laschen haben eine Doppelfunktion. Zunächst fixieren sie das Schiebeelement verliersicher auf dem Grundkörper. Weiterhin verläuft die Führungsschiene des Schiebeelements zwischen den Laschen, so dass das Schiebeelement leichtgängig und ohne zu verkanten auf den Grundkörper vor- und zurückgeschoben werden kann, allerdings nur, wenn sich das Sperrelement in der offenen Stellung befindet.

Wenn sich das Sperrelement in der verriegelten Stellung befindet, stößt der Steg des Führungselements gegen die Laschen des Grundkörpers. Dadurch wird eine Schiebebewegung des Schiebeelements verhindert und eine Verbindung des Steckverbinders kann nicht getrennt werden.

In einer besonders vorteilhaften Ausführungsform der Erfindung weist das Sperrelement außenseitig eine Kontur auf, in welche ein Werkzeug eingreifbar ist. Mit dem Werkzeug ist die zur Ver- und Entriegelung notwendige Drehbewegung des Sperrelements erzeugbar. Bei der Kontur kann es sich beispielsweise um einen Schlitz handeln, in welchen ein Schlitzschraubendreher eingreifen kann. Es ist jedoch auch ein Kreuzschlitz, eine Innensechskantform, eine Innensechsrund oder Außensechsrund (auch als Torx bekannt) denkbar. Auch eine erhabene Kontur, auf die beispielsweise eine so genannte Nuss aus einem so genannten Knarrenkastens aufsetzbar ist, ist grundsätzlich denkbar. Selbstverständlich sind weitere Ausformungen denk- und umsetzbar.

In einer alternativen Ausführungsform der Erfindung weist der Grundkörper des Steckverbinders eine Nut auf, in welcher das Sperrelement verschiebbar gelagert ist. Die Verschieberichtung des Sperrelements ist dabei senkrecht zur Steckachse und damit auch senkrecht zur Schieberichtung des Schiebeelements ausgerichtet.

Das Sperrelement verfügt vorzugsweise über einen nach außen gerichteten Sperrsteg. Das Schiebelement weist in diesem Fall eine Ausnehmung auf, in welcher der Sperrsteg passgenau aufnehmbar ist.

Befindet sich das Sperrelement in seiner offenen Stellung, kann das Schiebelement auf dem Grundkörper in Richtung der Steckachse des Steckverbinders hin- und hergeschoben werden. Bei einer Schiebebewegung entgegen der Steckrichtung greift dabei die Ausnehmung über den Sperrsteg des Sperrelements über.

Befindet sich das Sperrelement in seiner verriegelten Stellung, kann das Schiebelement auf dem Grundkörper nicht mehr entgegen der Steckrichtung geschoben werden. Das Schiebelement wird dabei durch den Sperrsteg des Sperrelements blockiert.

Bei der vorliegenden Erfindung können die Sperrelemente sehr einfach so gestaltet werden, dass sie nur mit einem Werkzeug oder komplett werkzeuglos bedienbar sind. Hierzu bedarf es nur marginale Änderungen an der Außenkontur des Sperrelements. So können Steckverbinder in beiden Varianten zur Verfügung gestellt werden, so dass die Steckverbinder unterschiedliche Applikationen bzw. Anforderungen bedienen können.

### Ausführungsbeispiel

Ein Ausführungsbeispiel der Erfindung ist in den Zeichnungen dargestellt und wird im Folgenden näher erläutert. Es zeigen:
- Fig. 1: eine perspektivische Darstellung eines erfindungsgemäßen Steckverbinders,
- Fig. 2: eine perspektivische Darstellung eines erfindungsgemäßen Grundkörpers des Steckverbinders,
- Fig. 3: eine perspektivische Darstellung eines erfindungsgemäßen Schiebeelements des Steckverbinders,
- Fig. 4: eine perspektivische Darstellung eines erfindungsgemäßen Sperrelements des Steckverbinders,
- Fig. 5: eine Draufsicht auf einen Ausschnitt des Steckverbinders mit einem Sperrelement in einer offenen Stellung,
- Fig. 6: eine Draufsicht auf einen Ausschnitt des Steckverbinders mit einem Sperrelement in einer verriegelten Stellung,
- Fig. 7: einen perspektivischen Teilausschnitt eines Grundkörpers einer alternativen Ausführungsform des Steckverbinders,
- Fig. 8: einen perspektivischen Teilausschnitt eines Schiebeelements der alternativen Ausführungsform des Steckverbinders,
- Fig. 9: eine Draufsicht auf einen Ausschnitt des alternativen Steckverbinders mit einem Sperrelement in einer offenen Stellung,
- Fig. 10: eine Draufsicht auf einen Ausschnitt des alternativen Steckverbinders mit einem Sperrelement in einer verriegelten Stellung und
- Fig. 11: eine perspektivische Darstellung eines erfindungsgemäßen Sperrelements des alternativen Steckverbinders,

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

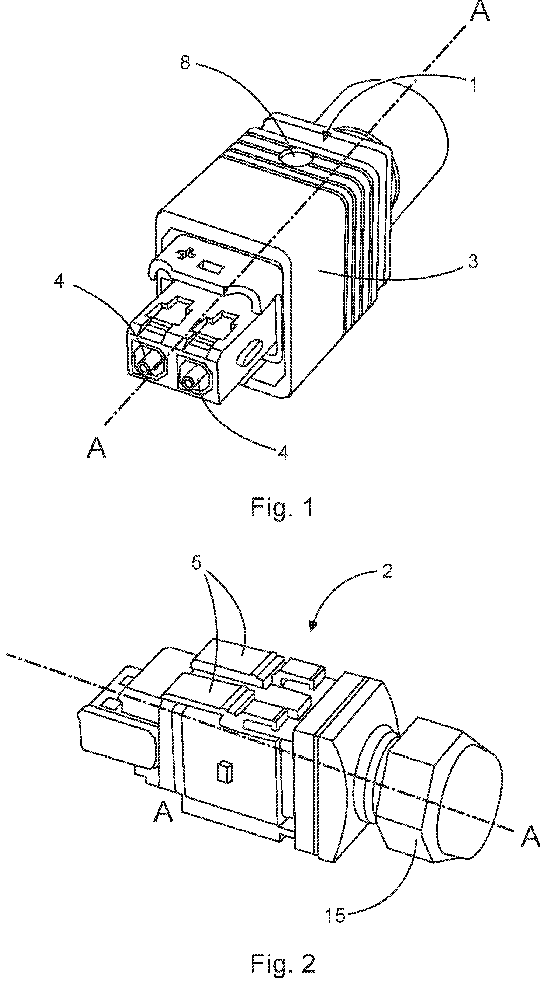

Die Figur 1 zeigt einen erfindungsgemäßen Steckverbinder 1. Der

Steckverbinder weist in diesem Beispiel Kontaktelemente 4 zur Übertragung von optischen Datensignalen auf. Es können aber auch andere Kontaktelemente, beispielsweise elektrische Kontaktelemente, vorgesehen werden.

Bei dem hier gezeigten Steckverbinder 1 handelt es sich um einen so genannten Push-Pull Steckverbinder. Wie oben bereits hinreichend ausgeführt, verfügt der Steckverbinder 1 über ein Schiebeelement 3. Bei einer Verbindung des Steckverbinders 1 mit einer geeigneten Buchse (nicht gezeigt) oder einem Gegensteckverbinder (ebenfalls nicht gezeigt) ist das Schiebeelement - entlang der Steckachse A - verschiebbar auf dem Grundkörper 2 des Steckverbinders 1 gelagert.

In Figur 2 ist der Grundkörper 2 des Steckverbinders 1 dargestellt. Am Grundkörper 2 sind zwei parallel zueinander verlaufende Laschen 5 angeformt, die sich parallel zur Steckachse A erstrecken. Über die Laschen 5 wird einerseits das Schiebeelement 3 auf dem Grundkörper 2 verliersicher fixiert. Andererseits verläuft zwischen den Laschen 5 ein Kanal, in welchem eine innenseitig am Schiebeelement 3 angeformte Führungsschiene 7 verläuft. Hierdurch wird eine geradlinige und verkantungsfreie Bewegung des Schiebelements 3 auf dem Grundkörper 2 entlang der Steckachse A gewährleistet.

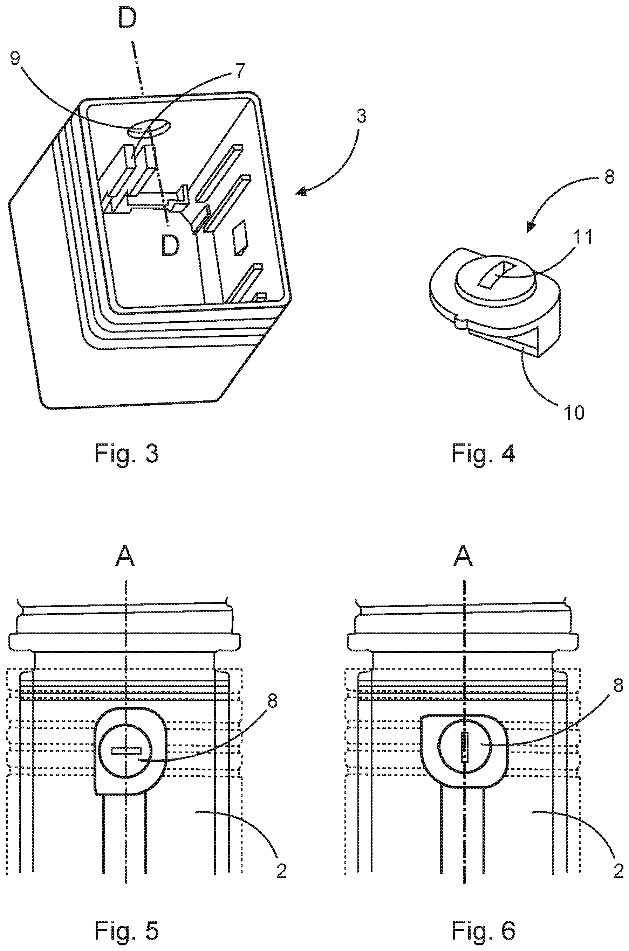

In Figur 3 ist ein erfindungsgemäßes Schiebeelement 3 dreidimensional abgebildet. Das Schiebelement 3 hat die Form einer Hülse mit einem im Wesentlichen rechteckigen Querschnitt. Innenseitig ist die oben erwähnte Führungsschiene 7 zu erkennen. Die Führungsschiene 7 ist zwischen den Laschen 5 des Grundkörpers 2 angeordnet. Das Schiebeelement 3 weist eine Öffnung 9 auf, in welcher das Sperrelement 8 angeordnet bzw. drehbar gelagert ist. Das Sperrelement 8 ist in Figur 4 separat dargestellt.

Das Sperrelement 8 weist einen Steg 10 auf, der innenseitig aus dem Schiebelement 3 herausragt. Außenseitig weist das Sperrelement 8 eine Kontur 11 auf, die in diesem Ausführungsbeispiel als ein Schlitz zum Eingriff eines Schlitzschraubendrehers (nicht gezeigt) ausgeführt ist. Über diese Kontur kann das Sperrelement 8 mithilfe des Schraubendrehers gedreht werden, wobei die Drehachse D senkrecht zur Steckachse ausgebildet ist.

Durch eine Drehbewegung kann das Sperrelement 8 in eine offene Stellung gebracht werden, wie sie in Figur 5 zu sehen ist. In dieser Stellung befindet sich der Steg 10 des Sperrelements 8 parallel zur Führungsschiene 7 des Schiebeelements 3. In dieser Stegstellung kann das Schiebeelement 3 entlang der Steckachse A auf dem Grundkörper 2 hin und her bewegt werden, so dass die Verbindung des Steckverbinders 1 hergestellt aber auch getrennt werden kann.

In Figur 6 ist die verriegelte Stellung des Sperrelements 8 dargestellt. In dieser Stellung ist der Steg 10 des Sperrelements 8 senkrecht zur Führungsschiene 7 ausgerichtet. Wenn man das Schiebelement 3 ist dieser Situation bewegen will, stößt der Steg an die Laschen 5 des Grundkörpers 2. Dadurch wird eine weitere Bewegung des Schiebelements 3 blockiert. Ein Steckverbinder 1, der sich in einer gesteckten Situation befindet, kann nicht versehentlich abgezogen werden. Auch ein Stecken bzw. Verbinden des Steckverbinders 1 ist in dieser Stellung des Sperrelements 8 nicht möglich.

In dem hier gezeigten Ausführungsbeispiel zeigt die Ausrichtung der Kontur 11 an, ob sich das Sperrelement 8 in einer offenen Stellung oder in einer verriegelten Stellung befindet. Ist die Kontur 11 parallel zur Steckachse A ausgerichtet, befindet sich das Sperrelement 8 in einer offenen Stellung (Figur 5). Steht die Kontur 11 jedoch senkrecht zur Steckachse, befindet sich das Sperrelement 8 in der verriegelten Stellung (Figur 6). So kann man bereits visuell den Verriegelungszustand der Steckverbindung erkennen.

Der Steckverbinder 1 weist eine Kabelverschraubung 15 auf. Beim Lösen der Verbindung des Steckverbinders 1 wird das Schiebeelement 3 in Richtung der Kabelverschraubung - in die so genannte Anschlussrichtung - gezogen. Diese Ziehrichtung wird durch die Sperrstellung des erfindungsgemäßen Sperrelements 8, 8' blockiert.

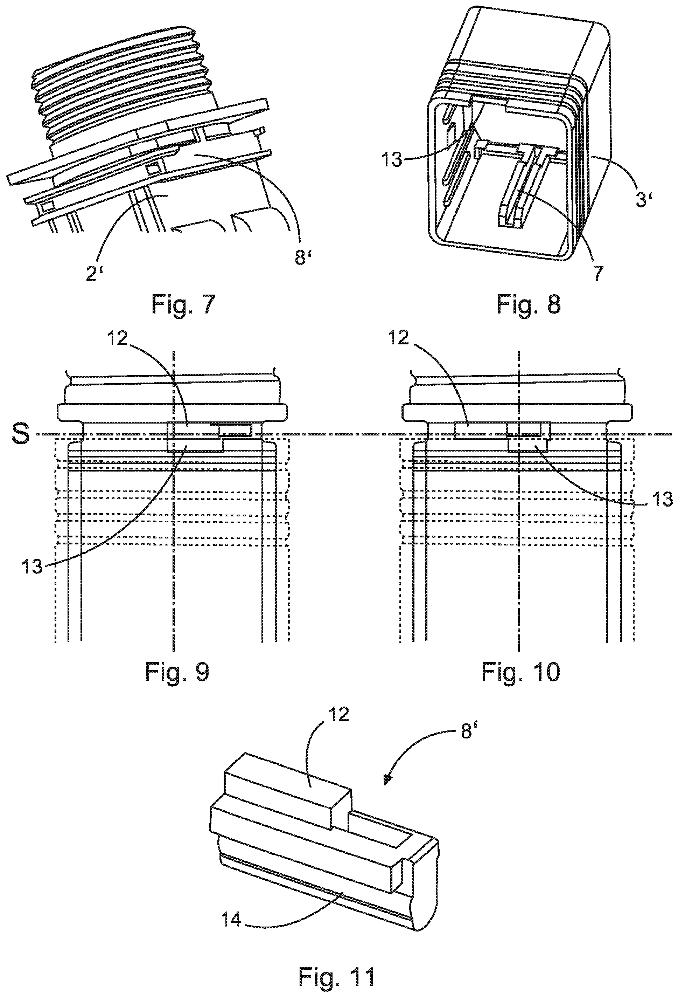

In Figur 7 ist ein Ausschnitt eines Grundkörpers 2' zu sehen, der zu einer alternativen Ausführungsform eines erfindungsgemäßen Steckverbinders gehört. In dem Grundkörper 2' ist eine Nut eingeformt, in welcher ein Schiebesteg 14 eines alternativen Sperrelements 8' eingreift, wodurch dieses entlang der Schiebeachse S am Grundkörper 2' verschiebbar gelagert ist.

Figur 8 zeigt das Schiebeelement 3' der alternativen Ausführungsform des Steckverbinders. Anschlussseitig weist das Schiebeelement 3' in ihrer Umrandung eine Ausnehmung 13 auf, in welcher ein Sperrsteg 12 des zugehörigen Sperrelements 8' (siehe Figur 11) passgenau aufnehmbar ist.

In Figur 9 ist das Sperrelement 8' in seiner offenen Stellung dargestellt. Beim Ziehen des Schiebelements 3' in Anschlussrichtung greift die Ausnehmung 13 über den Sperrsteg 12 des Sperrelements 8'. In dieser Position kann die Verbindung des Steckverbinders gelöst werden.

In Figur 10 ist das Sperrelement 8' in seiner verriegelten Stellung dargestellt. Beim Ziehen des Schiebelements 3' in Anschlussrichtung stößt dessen Rand gegen den Sperrsteg 12 des Sperrelements 8'. In dieser Position kann die Verbindung des Steckverbinders nicht gelöst werden.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

### Bezugszeichenliste

- 1: Steckverbinder
- 2 , 2': Grundkörper
- 3 , 3': Schiebeelement
- 4: Kontaktelement
- 5: Lasche

- 7: Führungsschiene
- 8 , 8': Sperrelement
- 9: Öffnung
- 10: Steg
- 11: Kontur
- 12: Sperrsteg
- 13: Ausnehmung des Schiebelements 3'
- 14: Schiebesteg
- 15: Kabelverschraubung

- A: Steckachse
- D: Drehachse
- S: Schiebeachse

## Patentansprüche

1. Push-Pull-Steckverbinder (1), welcher einen Grundkörper (2) und ein Schiebeelement (3) aufweist, wobei das Schiebeelement (3) den Grundkörper (2) umfasst und auf diesem, entlang einer Steckachse (A) des Push-Pull-Steckverbinders (1) beweglich angeordnet ist,
**dadurch gekennzeichnet,**
**dass** der Push-Pull-Steckverbinder (1) ein Sperrelement (8) aufweist, welches zwischen einer offenen Stellung und einer verriegelten Stellung drehbar an dem Schiebeelement (3)
angeordnet ist, wobei die Drehachse (D) des Sperrelements (8) senkrecht zur Steckachse (A) des Push-Pull-Steckverbinders (1) steht
oder
**dass** der Push-Pull-Steckverbinder (1) ein Sperrelement (8) aufweist, welches zwischen einer offenen Stellung und einer verriegelten Stellung verschiebbar an dem Schiebeelement (3) angeordnet ist, wobei die Schiebeachse des Sperrelements (8) senkrecht zur Steckachse (A) des Push-Pull-Steckverbinders (1) steht.

2. Push-Pull-Steckverbinder (1) nach Anspruch 1
**dadurch gekennzeichnet, dass**
das Schiebelement (3) eine durchgehende Öffnung (9) aufweist, in welcher das Sperrelement (8) zumindest bereichsweise angeordnet ist.

3. Push-Pull-Steckverbinder (1) nach einem der vorstehenden Ansprüche **dadurch gekennzeichnet, dass** das Schiebeelement (3) eine innenliegende und parallel zur Steckachse (A) verlaufenden Führungsschiene (7) aufweist.

4. Push-Pull-Steckverbinder (1) nach einem der vorstehenden Ansprüche **dadurch gekennzeichnet, dass** das Sperrelement (8) einen zum Grundkörper (2) gerichteten Steg (10) aufweist.

5. Push-Pull-Steckverbinder (1) nach den beiden vorstehenden Ansprüchen **dadurch gekennzeichnet,**
**dass** der Steg (10) senkrecht zur Führungsschiene (7) steht, wenn sich das Sperrelement (8) in der verriegelten Stellung befindet und dass der Steg (10) parallel zur Führungsschiene (7) steht, wenn sich das Sperrelement (8) in der offenen Stellung befindet.

6. Push-Pull-Steckverbinder (1) nach einem der vorstehenden Ansprüche
**dadurch gekennzeichnet, dass**
am Grundkörper (2) zwei parallel zueinander angeordnete Laschen (5) angeformt sind.

7. Push-Pull-Steckverbinder (1) nach den Ansprüchen 3 und 6
**dadurch gekennzeichnet, dass**
die Führungsschiene (7) im Wesentlichen zwischen den Laschen (5) verläuft.

8. Push-Pull-Steckverbinder (1) nach den Ansprüchen 5 und 6
**dadurch gekennzeichnet, dass**
der Steg (10), bei einer Schiebebewegung des Schiebeelements (3), gegen die Laschen (5) stößt, wenn sich das Sperrelement (8) in der verriegelten Stellung befindet.

9. Push-Pull-Steckverbinder (1) nach einem der vorstehenden Ansprüche **dadurch gekennzeichnet, dass**
das Sperrelement (8) außenseitig eine Kontur (11) aufweist, in welche ein Werkzeug eingreifbar ist,
so dass mit dem Werkzeug die Drehbewegung des Sperrelements (8) erzeugbar ist.

10. Push-Pull-Steckverbinder (1) nach Anspruch 1
**dadurch gekennzeichnet, dass**
das Sperrelement (8') einen nach außen gerichteten Sperrsteg (12) aufweist.

11. Push-Pull-Steckverbinder (1) nach vorstehendem Anspruch **dadurch gekennzeichnet, dass**
das Schiebelement (3') eine Ausnehmung (13) aufweist, in welcher der Sperrsteg (12) passgenau aufnehmbar ist.

12. Push-Pull-Steckverbinder (1) nach vorstehendem Anspruch **dadurch gekennzeichnet,**
**dass** die Ausnehmung (13) und der Sperrsteg (12) entlang der Steckachse (A) zueinander ausgerichtet sind, wenn sich das Sperrelement (8') in seiner offenen Stellung befindet und
**dass** die Ausnehmung (13) und der Sperrsteg (12) entlang der Steckachse (A) versetzt zueinander ausgerichtet sind, wenn sich das Sperrelement (8') in seiner verriegelten Stellung befindet.

## Claims

1. Push-pull connector (1), which has a base body (2) and a sliding element (3), wherein the sliding element (3) encompasses the base body (2) and is movably arranged thereon along a mating axis (A) of the push-pull connector (1), **characterized in that** the push-pull connector (1) has a locking element (8), which is rotatably arranged on the sliding element between an open position and a locked position, wherein the rotational axis (D) of the locking element (8) is perpendicular to the mating axis (A) of the push-pull connector (1), or that the push-pull connector (1) has a locking element (8), which is slidably arranged on the sliding element between an open position and a locked position, wherein the sliding axis of the locking element (8) is perpendicular to the mating axis (A) of the push-pull connector (1).

2. Push-pull connector (1) according to claim 1, **characterized in that** the sliding element (3) has a through opening (9), in which the locking element (8) is at least partially arranged.

3. Push-pull connector (1) according to one of the preceding claims, **characterized in that** the sliding element (3) has an internal guide rail (7) running parallel to the mating axis (A).

4. Push-pull connector (1) according to one of the preceding claims, **characterized in that** the locking element (8) has a web (10) directed toward the base body (2).

5. Push-pull connector (1) according to the two preceding claims, **characterized in that** the web (10) is perpendicular to the guide rail (7) when the locking element (8) is in the locked position, and that the web (10) is parallel to the guide rail (7) when the locking element (8) is in the open position.

6. Push-pull connector (1) according to one of the preceding claims, **characterized in that** two tabs (5) arranged parallel to each other are formed on the base body (2).

7. Push-pull connector (1) according to claims 3 and 6, **characterized in that** the guide rail (7) runs substantially between the tabs (5).

8. Push-pull connector (1) according to claims 5 and 6, **characterized in that** the web (10), during a sliding movement of the sliding element (3), abuts against the tabs (5) when the locking element (8) is in the locked position.

9. Push-pull connector (1) according to one of the preceding claims, **characterized in that** the locking element (8) has an external contour (11) into which a tool can engage, so that the rotational movement of the locking element (8) can be generated with the tool.

10. Push-pull connector (1) according to claim 1, **characterized in that** the locking element (8') has an outwardly directed locking web (12).

11. Push-pull connector (1) according to the preceding claim, **characterized in that** the sliding element (3') has a recess (13) in which the locking web (12) can be received with a precise fit.

12. Push-pull connector (1) according to the preceding claim, **characterized in that** the recess (13) and the locking web (12) are aligned with each other along the mating axis (A) when the locking element (8') is in its open position, and that the recess (13) and the locking web (12) are offset from each other along the mating axis (A) when the locking element (8') is in its locked position.

## Revendications

1. Connecteur push-pull (1), qui présente un corps de base (2) et un élément coulissant (3), l'élément coulissant (3) englobant le corps de base (2) et étant disposé de manière mobile sur celui-ci le long d'un axe d'enfichage (A) du connecteur push-pull (1), **caractérisé en ce que** le connecteur push-pull (1) présente un élément de verrouillage (8), qui est disposé de manière rotative sur l'élément coulissant entre une position ouverte et une position verrouillée, l'axe de rotation (D) de l'élément de verrouillage (8) étant perpendiculaire à l'axe d'enfichage (A) du connecteur push-pull (1), ou **en ce que** le connecteur push-pull (1) présente un élément de verrouillage (8), qui est disposé de manière coulissante sur l'élément coulissant entre une position ouverte et une position verrouillée, l'axe de coulissement de l'élément de verrouillage (8) étant perpendiculaire à l'axe d'enfichage (A) du connecteur push-pull (1).

2. Connecteur push-pull (1) selon la revendication 1, **caractérisé en ce que** l'élément coulissant (3) présente une ouverture traversante (9), dans laquelle l'élément de verrouillage (8) est disposé au moins partiellement.

3. Connecteur push-pull (1) selon l'une des revendications précédentes, **caractérisé en ce que** l'élément coulissant (3) présente un rail de guidage (7) interne s'étendant parallèlement à l'axe d'enfichage (A).

4. Connecteur push-pull (1) selon l'une des revendications précédentes, **caractérisé en ce que** l'élément de verrouillage (8) présente une traverse (10) dirigée vers le corps de base (2).

5. Connecteur push-pull (1) selon les deux revendications précédentes, **caractérisé en ce que** la traverse (10) est perpendiculaire au rail de guidage (7) lorsque l'élément de verrouillage (8) se trouve dans la position verrouillée, et **en ce que** la traverse (10) est parallèle au rail de guidage (7) lorsque l'élément de verrouillage (8) se trouve dans la position ouverte.

6. Connecteur push-pull (1) selon l'une des revendications précédentes, **caractérisé en ce que** deux pattes (5) disposées parallèlement l'une à l'autre sont formées sur le corps de base (2).

7. Connecteur push-pull (1) selon les revendications 3 et 6, **caractérisé en ce que** le rail de guidage (7) s'étend essentiellement entre les pattes (5).

8. Connecteur push-pull (1) selon les revendications 5 et 6, **caractérisé en ce que** la traverse (10), lors d'un mouvement de coulissement de l'élément coulissant (3), bute contre les pattes (5) lorsque l'élément de verrouillage (8) se trouve dans la position verrouillée.

9. Connecteur push-pull (1) selon l'une des revendications précédentes, **caractérisé en ce que** l'élément de verrouillage (8) présente sur sa face externe un contour (11) dans lequel un outil peut s'engager, de sorte que le mouvement de rotation de l'élément de verrouillage (8) peut être généré avec l'outil.

10. Connecteur push-pull (1) selon la revendication 1, **caractérisé en ce que** l'élément de verrouillage (8') présente une traverse de blocage (12) dirigée vers l'extérieur.

11. Connecteur push-pull (1) selon la revendication précédente, **caractérisé en ce que** l'élément coulissant (3') présente un évidement (13) dans lequel la traverse de blocage (12) peut être reçue avec un ajustement précis.

12. Connecteur push-pull (1) selon la revendication précédente, **caractérisé en ce que** l'évidement (13) et la traverse de blocage (12) sont alignés l'un par rapport à l'autre le long de l'axe d'enfichage (A) lorsque l'élément de verrouillage (8') se trouve dans sa position ouverte, et **en ce que** l'évidement (13) et la traverse de blocage (12) sont décalés l'un par rapport à l'autre le long de l'axe d'enfichage (A) lorsque l'élément de verrouillage (8') se trouve dans sa position verrouillée.
